# EUROPEAN PATENT APPLICATION

(11) **EP 4 618 434 A1**
(43) Date of publication of application: **17.09.2025**
(21) Application number: 23893414.5
(22) Date of filing: 26.09.2023
(51) Int. Cl.: H04B 7/06

(54) **COMMUNICATION APPARATUS**

(30) Priority: 21.11.2022 CN 202211457518
(71) Applicant: Huawei Technologies Co., Ltd., Shenzhen, Guangdong 518129 (CN)
(72) Inventor: XIAO, Weihong, Shenzhen, Guangdong 518129 (CN); PU, Tao, Shenzhen, Guangdong 518129 (CN); NI, Shuang, Shenzhen, Guangdong 518129 (CN); PENG, Zhongwei, Shenzhen, Guangdong 518129 (CN); WANG, Linlin, Shenzhen, Guangdong 518129 (CN)
(74) Representative: Gill Jennings & Every LLP
(86) International application number: PCT/CN2023/121310
(87) International publication number: WO 2024/109322

(57) **Abstract**

Embodiments of this application disclose a communication apparatus, configured to control a gain/beam width and a direction of a beam, to adapt to different application scenarios. In this application, the communication apparatus includes a first channel. The first channel includes a first power divider, a first switch, a first phase shifter, a first antenna subarray, and a third antenna subarray. The first power divider is separately connected to the first antenna subarray and the third antenna subarray. The first switch is disposed on a branch circuit on which the first power divider is connected to the first antenna subarray. The first phase shifter is disposed on the branch circuit on which the first power divider is connected to the first antenna subarray or a branch circuit on which the first power divider is connected to the third antenna subarray. After the first power divider is connected to a power amplifier, a quantity of driven antenna subarrays may be controlled by controlling the first switch to be turned on or turned off, to control a gain/beam width of a formed beam; and a direction of the formed beam may be controlled by controlling the first phase shifter.

## Description

This application claims priority to Chinese Patent Application No. CN202211457518.9, filed with the China National Intellectual Property Administration on November 21, 2022 and entitled "COMMUNICATION APPARATUS", which is incorporated herein by reference in its entirety.

### TECHNICAL FIELD

This application relates to the field of communication technologies, and in particular, to a communication apparatus.

### BACKGROUND

A beamforming technology is a key technology used to adjust a beam direction in new radio (new radio, NR). Correlation between signals and a principle of interference between beams are mainly used. An amplitude and a phase of a signal on each antenna element are changed, to direct a main lobe of a beam to a target user, and direct a null and a side lobe to another user. This enhances a received signal of a target terminal device, and also reduces interference between different terminal devices, thereby improving a system capacity.

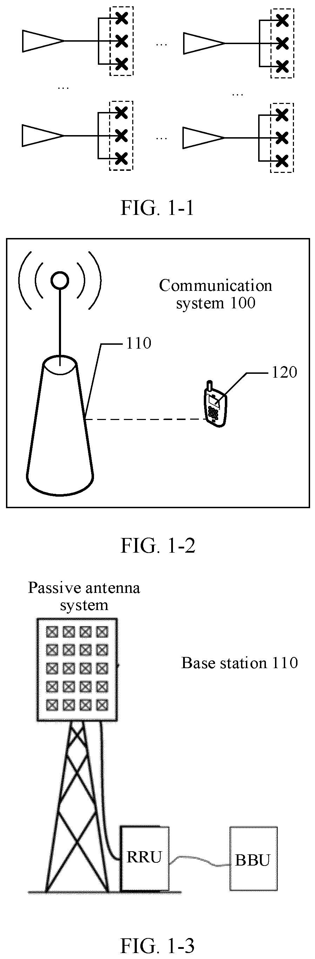

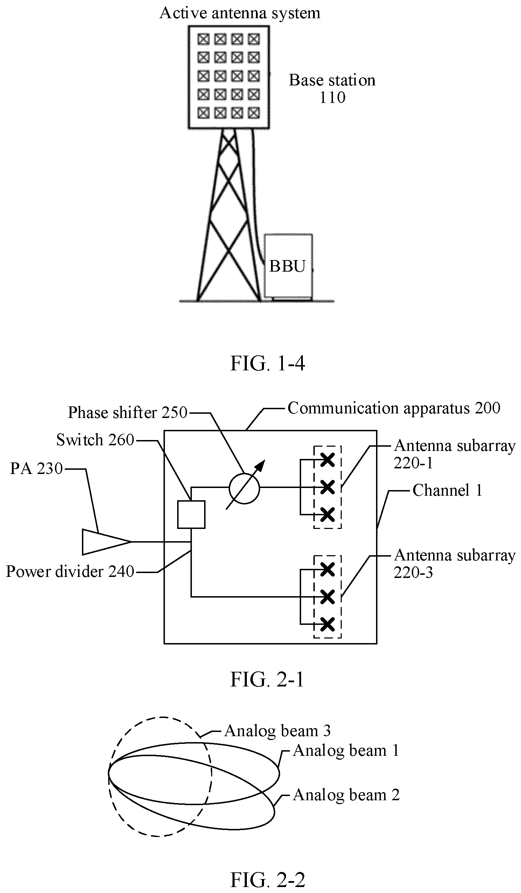

In multiple input multiple output (multiple input multiple output, MIMO), by using the beamforming technology, a terminal device can more flexibly select a beam based on a channel status, thereby improving a system capacity. For example, FIG. 1-1 shows an example of a feeding system based on a MIMO technology. The feeding system includes a plurality of power amplifiers and a plurality of antenna subarrays. Each subarray includes a plurality of antenna elements. Each power amplifier is connected to and drives an antenna subarray.

In the foregoing technology, one power amplifier can drive only one antenna subarray. Consequently, an antenna gain is low, and a radiation distance is short. Currently, a power divider may be added to a power amplifier, and the power divider is separately connected to two antenna subarrays, so that one power amplifier can drive two antenna subarrays, thereby improving an antenna gain to form a beam implementing farther radiation, and increasing a signal radiation distance. However, such a beam is narrower and is not applicable to a scenario with wider coverage.

### SUMMARY

Embodiments of this application provide a communication apparatus, configured to control a gain/beam width and a direction of a beam, to adapt to different application scenarios.

A first aspect of this application provides a communication apparatus, including a first channel. The first channel includes a first power divider, a first switch, a first phase shifter, a first antenna subarray, and a third antenna subarray. The first power divider is separately connected to the first antenna subarray and the third antenna subarray. The first switch is disposed on a branch circuit on which the first power divider is connected to the first antenna subarray. The first phase shifter is disposed on the branch circuit on which the first power divider is connected to the first antenna subarray or a branch circuit on which the first power divider is connected to the third antenna subarray.

In this application, after the first power divider is connected to a power amplifier PA, a quantity of driven antenna subarrays may be controlled by controlling the first switch to be turned on or turned off, to control a gain/beam width of a formed beam; and a direction of the formed beam may be controlled by controlling the first phase shifter. Therefore, in this application, the gain/beam width and the direction of the beam can be controlled, to adapt to different application scenarios.

In some feasible implementations, the first channel further includes a second switch, a second phase shifter, a third phase shifter, a second power divider, a third power divider, a second antenna subarray, and a fourth antenna subarray. The first antenna subarray, the second antenna subarray, the third antenna subarray, and the fourth antenna subarray are sequentially arranged. The second power divider is connected to the first power divider and the third power divider. The third power divider is connected to the second antenna subarray and the fourth antenna subarray. The second switch is disposed on a branch circuit on which the third power divider is connected to the second antenna subarray. The second phase shifter is disposed on a branch circuit on which the second power divider is connected to the first power divider or a branch circuit on which the second power divider is connected to the third power divider. The third phase shifter is disposed on the branch circuit on which the third power divider is connected to the second antenna subarray or a branch circuit on which the third power divider is connected to the fourth antenna subarray. In this case, a quantity of antenna subarrays driven by the PA may be controlled by controlling the first switch and the second switch to be turned on or turned off, to control a gain/beam width of a formed beam; and a direction of the formed beam may be controlled by controlling the first phase shifter, the second phase shifter, and the third phase shifter. Therefore, in this application, the gain/beam width and the direction of the beam can be controlled, to adapt to different application scenarios.

In some feasible implementations, the first channel further includes a third switch, and the third switch is disposed on the branch circuit on which the second power divider is connected to the first power divider. In this case, a quantity of antenna subarrays driven by the PA may be controlled by controlling the third switch to be turned on or turned off, to control a gain/beam width of a formed beam, thereby adapting to different application scenarios.

In some feasible implementations, the first channel further includes a fourth switch, and the fourth switch is a double-pole double-throw switch. The fourth switch is separately connected to the first power divider, the third power divider, the second antenna subarray, and the third antenna subarray. When the fourth switch is in a first state, the first power divider is connected to the third antenna subarray, and the third power divider is connected to the second antenna subarray. When the fourth switch is in a second state, the first power divider is connected to the second antenna subarray, and the third power divider is connected to the third antenna subarray. In this case, a connection relationship between a power divider, a phase shifter, and a subarray may be controlled by controlling different connection states of the fourth switch, to control a scanning width of a formed beam, thereby adapting to different application scenarios.

In some feasible implementations, the first channel further includes a fifth switch. The fifth switch includes a first single-pole double-throw switch, a second single-pole double-throw switch, and a gating switch. The first single-pole double-throw switch is connected to the second power divider, the second single-pole double-throw switch is connected to the third antenna subarray, and the gating switch is connected to the third power divider. The first single-pole double-throw switch includes an interface 1 and an interface 2, the gating switch includes an interface 3, and the second single-pole double-throw switch includes an interface 4 and an interface 5. The interface 1 is connected to the first power divider, the interface 2 is connected to the interface 4, and the interface 5 is connected to the interface 3.

In some feasible implementations, when the fifth switch is in a third state, the first single-pole double-throw switch is connected to the interface 1, the gating switch is turned on, and the second single-pole double-throw switch is connected to the interface 5. When the fifth switch is in a fourth state, the first single-pole double-throw switch is connected to the interface 2, the gating switch is turned off, and the second single-pole double-throw switch is connected to the interface 4. In this case, a quantity of antenna subarrays driven by the PA may be controlled by controlling different connection states of the fifth switch, to control a gain/beam width of a formed beam, thereby adapting to different application scenarios.

In some feasible implementations, each antenna subarray in the passive antenna system is vertically placed or horizontally placed, to adapt to different application scenarios.

In some feasible implementations, each antenna subarray in the passive antenna system includes at least one antenna element.

In some feasible implementations, the passive antenna system further includes a control chip, and the control chip is configured to control each phase shifter and each switch in the passive antenna system, so that a quantity of antenna subarrays driven by the PA can be controlled, to control a gain/beam width of a formed beam; and a direction of the formed beam may be controlled by controlling the first phase shifter, the second phase shifter, and the third phase shifter. Therefore, in this application, the gain/beam width and the direction of the beam can be controlled, to adapt to different application scenarios.

In some feasible implementations, a second channel is further included. A plurality of antenna subarrays in the first channel and a plurality of antenna subarrays in the second channel are sequentially arranged, and a connection manner of a power divider, a switch, and the plurality of antenna subarrays in the second channel is mirror-symmetric with that in the first channel. Therefore, a single PA can drive more antenna subarrays, and a gain/beam width and a direction of a beam are controlled in more diversified manners, to adapt to more different application scenarios.

### BRIEF DESCRIPTION OF DRAWINGS

FIG. 1-1 is a diagram of a composition structure of a feeding system based on a MIMO technology;
FIG. 1-2 is a diagram of a composition structure of a communication system according to an embodiment of this application;
FIG. 1-3 is a diagram of an embodiment of a base station according to an embodiment of this application;
FIG. 1-4 is a diagram of an embodiment of a base station according to an embodiment of this application;
FIG. 2-1 is a diagram of an embodiment of a communication apparatus according to an embodiment of this application;
FIG. 2-2 is a diagram of an embodiment of an analog beam formed in an embodiment of this application;
FIG. 3-1 is a diagram of an embodiment of a communication apparatus according to an embodiment of this application;
FIG. 3-2 is a diagram of an embodiment of an analog beam formed in an embodiment of this application;
FIG. 4-1 is a diagram of an embodiment of a communication apparatus according to an embodiment of this application;
FIG. 4-2 is a diagram of another embodiment of a communication apparatus according to an embodiment of this application;
FIG. 4-3 is a diagram of an embodiment of a switch according to an embodiment of this application;
FIG. 5-1 is a diagram of an embodiment of a communication apparatus according to an embodiment of this application;
FIG. 5-2 is a diagram of another embodiment of a communication apparatus according to an embodiment of this application;
FIG. 5-3 is a diagram of another embodiment of a communication apparatus according to an embodiment of this application;
FIG. 5-4 is a diagram of another embodiment of a communication apparatus according to an embodiment of this application;
FIG. 6-1 is a diagram of an embodiment of a communication apparatus according to an embodiment of this application;
FIG. 6-2 is a diagram of another embodiment of a communication apparatus according to an embodiment of this application;
FIG. 6-3 is a diagram of another embodiment of a communication apparatus according to an embodiment of this application;
FIG. 6-4 is a diagram of another embodiment of a communication apparatus according to an embodiment of this application;
FIG. 7-1 is a diagram of an embodiment of a communication apparatus according to an embodiment of this application;
FIG. 7-2 is a diagram of another embodiment of a communication apparatus according to an embodiment of this application;
FIG. 7-3 is a diagram of another embodiment of a communication apparatus according to an embodiment of this application;
FIG. 7-4 is a diagram of another embodiment of a communication apparatus according to an embodiment of this application; and
FIG. 7-5 is a diagram of another embodiment of a communication apparatus according to an embodiment of this application.

### DESCRIPTION OF EMBODIMENTS

Embodiments of this application provide a communication apparatus, configured to control a gain/beam width and a direction of a beam, to adapt to different application scenarios.

The following describes embodiments of this application with reference to the accompanying drawings. It is clear that the described embodiments are merely some rather than all of embodiments of this application. A person of ordinary skill in the art may learn that, with development of a technology and emergence of a new scenario, the technical solutions provided in embodiments of this application are also applicable to a similar technical problem.

In the specification, claims, and accompanying drawings of this application, the terms such as "first" and "second" are intended to distinguish between similar objects but do not necessarily describe a specific order or sequence. It should be understood that the data termed in such a way is interchangeable in proper circumstances so that embodiments described herein can be implemented in orders other than the order in the content illustrated or described herein. Moreover, the terms "include", "have", and any other variants thereof are intended to cover non-exclusive inclusion. For example, a process, method, system, product, or device that includes a list of steps or modules is not necessarily limited to those steps or modules expressly listed, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

FIG. 1-2 is a diagram of a composition structure of a communication system according to an embodiment of this application. An embodiment of this application provides a communication system 100, including a base station 110 and a terminal device 120.

The communication system 100 may be a long term evolution (long term evolution, LTE) system, a 5th generation (5th generation, 5G) communication system, or another similar communication system. In addition, the communication system 100 may be further used in a future-oriented communication technology, and is used in all the technical solutions provided in embodiments of this application. A system architecture and a service scenario described in embodiments of this application are intended to describe the technical solutions in embodiments of this application more clearly, and do not constitute a limitation on the technical solutions provided in embodiments of this application. A person skilled in the art may learn that, with evolution of a network architecture and emergence of a new service scenario, the technical solutions provided in embodiments of this application are also applicable to a similar technical problem.

The terminal device 120 is a device used by a user, may also be referred to as user equipment (user equipment, UE), and is a device having a wireless transceiver function. The device may be deployed on land, including indoor or outdoor, wearable, handheld, or vehicle-mounted devices, may be deployed on water (for example, on a steamship), or may be deployed in the air (for example, on an airplane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in a remote medical (remote medical), a wireless terminal in a smart grid (smart grid), a wireless terminal in transportation safety (transportation safety), a wireless terminal in a smart city (smart city), a wireless terminal in a smart home (smart home), a wireless terminal in an internet of things (internet of things, IoT), or the like.

The base station 110 is an access device through which the terminal device 120 accesses a mobile communication system in a wireless manner, for example, an evolved NodeB (evolved NodeB, eNB), a transmission reception point (transmission reception point, TRP), a next generation NodeB (next generation NodeB, gNB) in a 5G mobile communication system, a base station in a future mobile communication system, or an access node in a Wi-Fi system. A specific technology and a specific device form that are used by the network device are not limited in this embodiment of this application.

In this embodiment of this application, as shown in FIG. 1-3, the base station 110 may include a passive antenna system, a remote radio unit (remote radio unit, RRU), and a baseband processing unit (baseband unit, BBU). The passive antenna system is connected to the RRU, and the RRU is connected to the BBU (through, for example, an optical fiber).

The passive antenna system includes an antenna array, the antenna array includes a plurality of antenna subarrays, and each antenna subarray may include a plurality of antenna elements. The antenna element is a constituent unit of a basic structure of the antenna array, can effectively radiate or receive a radio wave, and is also referred to as a radiating element. A power amplifier (power amplifier, PA) may be built in the RRU, and the PAis configured to be connected to and drive an antenna subarray. In some feasible implementations, the PA may be connected to and drive at least two antenna subarrays through a power divider, to improve an antenna gain.

It should be noted that, as shown in FIG. 1-4, the RRU and the passive antenna system may be integrated into an active antenna system. In this case, the base station 110 includes the active antenna system and the BBU.

A beamforming technology is a key technology used to adjust a beam direction in new radio (new radio, NR). Correlation between signals and a principle of interference between beams are mainly used. An amplitude and a phase of a signal on each antenna element are changed, to direct a main lobe of a beam to a target user, and direct a null and a side lobe to another user. This enhances a received signal of a target terminal device, and also reduces interference between different terminal devices, thereby improving a system capacity.

In multiple input multiple output (multiple input multiple output, MIMO), by using the beamforming technology, a terminal device can more flexibly select a beam based on a channel status, thereby improving a system capacity. A feeding system based on the MIMO technology includes a plurality of power amplifiers, a plurality of power dividers, and a plurality of antenna subarrays. Each subarray includes a plurality of antenna elements. Each power amplifier is connected to and drives an antenna subarray.

In the foregoing technology, one power amplifier can drive only one antenna subarray. Therefore, an antenna gain is low. Currently, a power divider may be added to a power amplifier, and the power divider is separately connected to two antenna subarrays, so that one power amplifier can drive two antenna subarrays, thereby improving an antenna gain. However, an analog beam becomes narrow, the narrowed analog beam may cause a performance loss, and users who can be covered by one analog beam at a same moment are centralized. Time-sharing coverage of all users can be implemented through analog beam switching at a transmission time interval (transmission time interval, TTI) level. However, the analog beam performs sending through time division scanning. This imposes a limitation that space division pairing can be performed for users only in one analog narrow beam, and consequently a cell capacity is impaired. In addition, scheduling opportunities of an uplink user are reduced, and consequently uplink performance of the user may degrade.

Therefore, this application provides a communication apparatus, including a first channel. The first channel includes a first power divider, a first switch, a first phase shifter, a first antenna subarray, and a third antenna subarray. The first power divider is separately connected to the first antenna subarray and the third antenna subarray. The first switch is disposed on a branch circuit on which the first power divider is connected to the first antenna subarray. The first phase shifter is disposed on the branch circuit on which the first power divider is connected to the first antenna subarray or a branch circuit on which the first power divider is connected to the third antenna subarray.

In this application, after the first power divider is connected to a power amplifier PA, a quantity of driven antenna subarrays may be controlled by controlling the first switch to be turned on or turned off, to control a gain/beam width of a formed beam; and a direction of the formed beam may be controlled by controlling the first phase shifter. Therefore, in this application, the gain/beam width and the direction of the beam can be controlled, to adapt to different application scenarios.

The following separately provides descriptions by using a plurality of embodiments.

### Embodiment 1

In this embodiment of this application, the communication apparatus includes a first channel. The first channel includes a first power divider, a first switch, a first phase shifter, a first antenna subarray, and a third antenna subarray. The first power divider is separately connected to the first antenna subarray and the third antenna subarray. The first switch is disposed on a branch circuit on which the first power divider is connected to the first antenna subarray. The first phase shifter is disposed on the branch circuit on which the first power divider is connected to the first antenna subarray or a branch circuit on which the first power divider is connected to the third antenna subarray.

For example, as shown in FIG. 2-1, a communication apparatus 200 includes a channel 1 (a first channel). The channel 1 includes two antenna subarrays 220, namely, an antenna subarray 220-1 (a first antenna subarray) and an antenna subarray 220-3 (a third antenna subarray), one power divider 240 (a first power divider), one phase shifter 250 (a first phase shifter), and one switch 260 (a first switch). Each antenna subarray 220 includes at least one antenna element. The switch 260 is disposed on a branch circuit on which the power divider 240 is connected to the antenna subarray 220-1. The phase shifter 250 is disposed on the branch circuit on which the power divider 240 is connected to the antenna subarray 220-1 or a branch circuit on which the power divider 240 is connected to the antenna subarray 220-3. In this embodiment of this application, an example in which the phase shifter 250 is disposed on the branch circuit on which the power divider 240 is connected to the antenna subarray 220-1 is used for description.

As shown in FIG. 2-1, when the switch 260 is turned on, the phase shifter 250 may perform phase shift on an electrical signal (by, for example, 45°, 90°, 135°, 180°, 225°, 270°, or 315°), so that the antenna subarray 220-1 and the antenna subarray 220-3 form an analog beam 1 at a first phase shift amount, and the antenna subarray 220-1 and the antenna subarray 220-3 form an analog beam 2 at a second phase shift amount, as shown in FIG. 2-2. In other words, one PA can drive two antenna subarrays, thereby improving an antenna gain. In addition, a plurality of analog beams can be implemented by switching a phase shift amount of the phase shifter. In some feasible implementations, when the switch 260 is turned off, the antenna subarray 220-3 may form an analog beam 3.

The analog beam 3 is wider but has a lower gain than the analog beam 1 or the analog beam 2. The analog beam 1 or the analog beam 2 has a higher gain but is narrower than the analog beam 3. Therefore, in this application, a gain/beam width and a direction of an analog beam can be changed based on an actual case, to adapt to different application scenarios, thereby having high flexibility.

It should be noted that a current beamforming technology is implemented through digital beamforming (digital beamforming, DBF) and analog beamforming (analog beamforming, ABF). DBF is implemented at a digital baseband back end, and ABF is implemented at an analog radio frequency front end. DBF can provide more accurate beamforming, but requires that each antenna port should have an independent baseband processing module and a high-power-consumption analog-to-digital/digital-to-analog (AD/DA) conversion module. This results in high complexity, power consumption, hardware costs, and the like. However, ABF is simpler and has low costs, but specific forming flexibility is sacrificed, and system performance is lost. To combine the advantages and disadvantages of the two forming manners, digital beamforming and analog beamforming are combined, in other words, beamforming with an adjustable amplitude/phase on an analog side is combined with baseband digital beamforming. This is referred to as hybrid beamforming (hybrid beamforming, HBF). In this embodiment of this application, beamforming may be performed in an HBF manner.

### Embodiment 2

In some feasible implementations, the first channel further includes a second switch, a second phase shifter, a third phase shifter, a second power divider, a third power divider, a second antenna subarray, and a fourth antenna subarray. The first antenna subarray, the second antenna subarray, the third antenna subarray, and the fourth antenna subarray are sequentially arranged. The second power divider is connected to the first power divider and the third power divider. The third power divider is connected to the second antenna subarray and the fourth antenna subarray. The second switch is disposed on a branch circuit on which the third power divider is connected to the second antenna subarray. The second phase shifter is disposed on a branch circuit on which the second power divider is connected to the first power divider or a branch circuit on which the second power divider is connected to the third power divider. The third phase shifter is disposed on the branch circuit on which the third power divider is connected to the second antenna subarray or a branch circuit on which the third power divider is connected to the fourth antenna subarray.

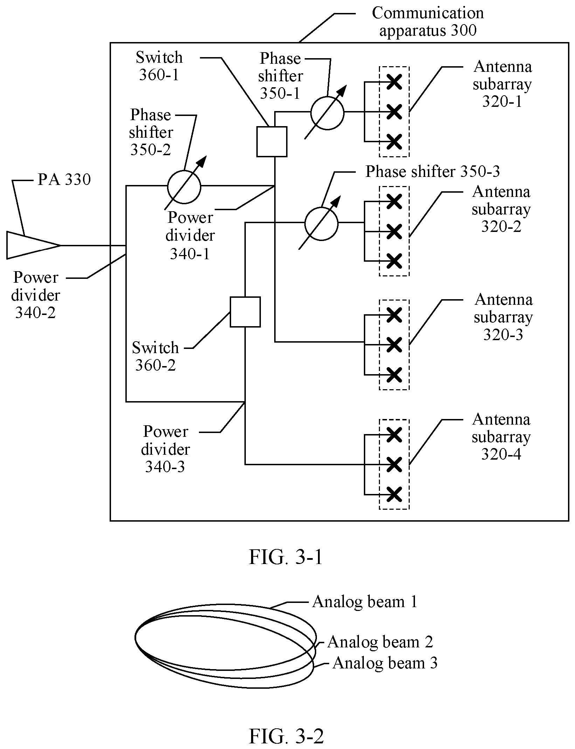

For example, as shown in FIG. 3-1, a communication apparatus 300 includes antenna subarrays 320-1 to 320-4 (a first antenna subarray, a second antenna subarray, a third antenna subarray, and a fourth antenna subarray), power dividers 340-1 to 340-3 (a first power divider, a second power divider, and a third power divider), phase shifters 350-1 to 350-3 (a first phase shifter, a second phase shifter, and a third phase shifter), and switches 360-1 and 360-2 (a first switch and a second switch). Each antenna subarray includes a plurality of antenna elements.

A PA 330 is connected to the power divider 340-2. The power divider 340-2 is separately connected to the power divider 340-1 and the power divider 340-3. The power divider 340-1 is separately connected to the antenna subarray 320-1 and the antenna subarray 320-3. The power divider 340-3 is separately connected to the antenna subarray 320-2 and the antenna subarray 320-4.

The switch 360-1 is disposed on a branch circuit on which the power divider 340-1 is connected to the antenna subarray 320-1. The switch 360-2 is disposed on a branch circuit on which the power divider 340-3 is connected to the antenna subarray 320-2.

For example, the phase shifter 350-1 is disposed on the branch circuit on which the power divider 340-1 is connected to the antenna subarray 320-1, the phase shifter 350-3 is disposed on the branch circuit on which the power divider 340-3 is connected to the antenna subarray 320-2, and the phase shifter 350-2 is disposed on a branch circuit on which the power divider 340-2 is connected to the power divider 340-1.

In this case, when the switch 360-1 and the switch 360-2 are turned on, one PA 330 is connected to more antenna subarrays, thereby improving an antenna gain. When the phase shifter 350-1, the phase shifter 350-2, and the phase shifter 350-3 separately perform phase shift (by, for example, 45°, 90°, 135°, 180°, 225°, 270°, or 315°), an analog beam formed by the antenna subarrays 320-1 to 320-4 may be switched to a plurality of different directions.

For example, when the switch 360-1 and the switch 360-2 are turned on, the following plurality of phase shift combination scenarios may be formed. Examples are as follows:

First phase shift combination scenario: When the phase shifters 350-1, 350-2, and 350-3 separately perform phase shift by 0°, the antenna subarrays 320-1 to 320-3 all perform phase shift by 0°, and the antenna subarray 320-4 does not perform phase shift.

Second phase shift combination scenario: When the phase shifter 350-2 performs phase shift by 45°, and the phase shifters 350-1 and 350-3 separately perform phase shift by 90°, the antenna subarray 320-1 performs phase shift by 135°, the antenna subarray 320-2 performs phase shift by 90°, the antenna subarray 320-3 performs phase shift by 45°, and the antenna subarray 320-4 does not perform phase shift.

Third phase shift combination scenario: When the phase shifter 350-2 performs phase shift by 90°, and the phase shifters 350-1 and 350-3 separately perform phase shift by 180°, the antenna subarray 320-1 performs phase shift by 270°, the antenna subarray 320-2 performs phase shift by 180°, the antenna subarray 320-3 performs phase shift by 90°, and the antenna subarray 320-4 does not perform phase shift.

In this case, as shown in FIG. 3-2, the antenna subarrays 320-1 to 320-4 form an analog beam 1 in the first phase shift combination scenario, the antenna subarrays 320-1 to 320-4 form an analog beam 2 in the second phase shift combination scenario, and the antenna subarrays 320-1 to 320-4 form an analog beam 3 in the third phase shift combination scenario. In each phase shift combination scenario, the PA 330 drives four antenna subarrays 320-1 to 320-4, thereby improving a gain of a formed analog beam compared with driving only one antenna subarray. In addition, quick switching may be performed between different phase shift combination scenarios, and analog beams in different directions are formed at different time, to adapt to different application scenarios.

In some feasible implementations, when the switch 360-1 and the switch 360-2 are turned off, and the phase shifters 350-1 to 350-3 perform phase shift by 0°, the antenna subarrays 320-3 and 320-4 may form an analog beam. The analog beam is wider than the plurality of analog beams in the foregoing plurality of phase shift scenarios in which the switch 360-1 and the switch 360-2 are turned on.

It should be noted that the foregoing Embodiment 1 and Embodiment 2 separately describe a case in which there is only one channel, and the following describes, by using Embodiment 3, a case in which there are two channels. It should be noted that, one PA and a communication apparatus corresponding to the PA are referred to as one channel, and two PAs and communication apparatuses respectively corresponding to the two PAs are referred to as two channels.

### Embodiment 3

In some feasible implementations, the communication apparatus further includes a second channel. A plurality of antenna subarrays in the first channel and a plurality of antenna subarrays in the second channel are sequentially arranged, and a connection manner of a power divider, a switch, and the plurality of antenna subarrays in the second channel is mirror-symmetric with that in the first channel.

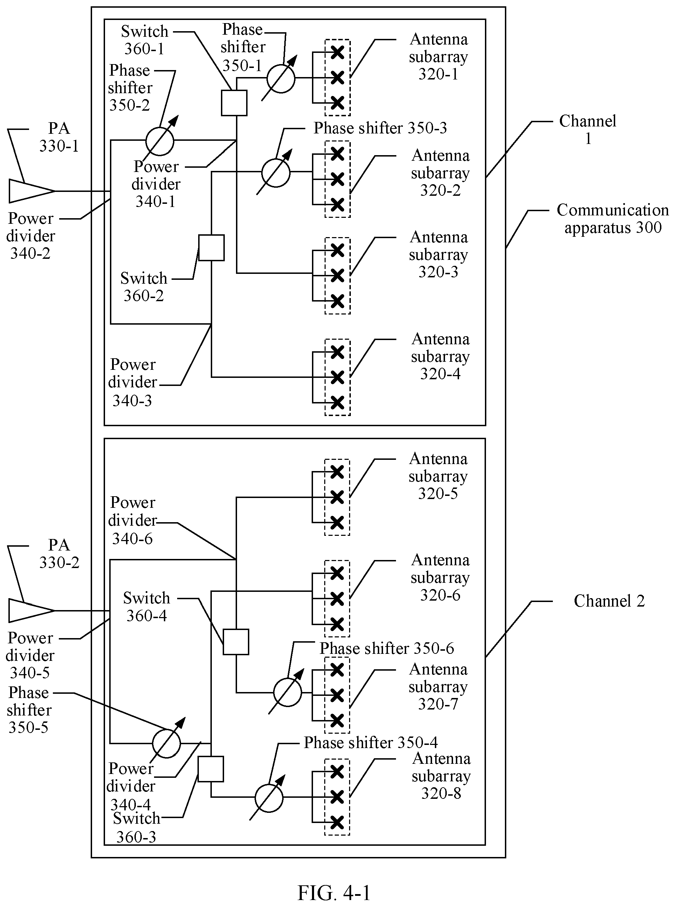

For example, as shown in FIG. 4-1, a communication apparatus 300 may include two channels, namely, a channel 1 (a first channel) and a channel 2 (a second channel). A plurality of antenna subarrays in the channel 1 and a plurality of antenna subarrays in the channel 2 are sequentially arranged, and a connection manner of a power divider, a switch, and the plurality of antenna subarrays in the channel 2 is mirror-symmetric with that in the channel 2.

A structure of the channel 1 is shown in the foregoing Embodiment 2, and details are not described herein again.

For example, the channel 2 includes antenna subarrays 320-5 to 320-8, power dividers 340-4 to 340-6, phase shifters 350-4 to 350-6, and switches 360-3 and 360-4. A PA 330-2 is connected to the power divider 340-5. The power divider 340-5 is separately connected to the power divider 340-4 and the power divider 340-6. The power divider 340-4 is separately connected to the antenna subarray 320-6 and the antenna subarray 320-8. The power divider 340-6 is separately connected to the antenna subarray 320-5 and the antenna subarray 320-7.

The switch 360-3 is disposed on a branch circuit on which the power divider 340-4 is connected to the antenna subarray 320-8. The switch 360-4 is disposed on a branch circuit on which the power divider 340-6 is connected to the antenna subarray 320-7.

For example, the phase shifter 350-4 is disposed on the branch circuit on which the power divider 340-4 is connected to the antenna subarray 320-8, the phase shifter 350-6 is disposed on the branch circuit on which the power divider 340-6 is connected to the antenna subarray 320-7, and the phase shifter 350-5 is disposed on a branch circuit on which the power divider 340-5 is connected to the power divider 340-4.

In some possible implementations, a plurality of antenna subarrays in the channel 1 and a plurality of antenna subarrays in the channel 2 are sequentially arranged, and a connection manner of a power divider, a switch, and the plurality of antenna subarrays in the channel 2 is mirror-symmetric with that in the channel 1.

In this case, when the switches 360-1 to 360-4 are turned on, the phase shifters 350-1 to 350-6 may be controlled to perform phase shift (by, for example, 45°, 90°, 135°, 180°, 225°, 270°, or 315°), so that the antenna subarrays 320-1 to 320-4 driven by a PA 330-1 form analog beams in a plurality of different directions, the antenna subarrays 320-5 to 320-8 driven by the PA 330-2 form analog beams in a plurality of different directions, and each PA drives a plurality of antenna subarrays, thereby improving an antenna gain.

For example, when the switches 360-1 to 360-4 are all turned on (referred to as a state 1 below), there may be a plurality of different phase shift combination scenarios. Examples are as follows:

First phase shift combination scenario: When the phase shifters 350-1 to 350-6 separately perform phase shift by 0°, the antenna subarrays 320-1 to 320-3 and 320-6 to 320-8 all perform phase shift by 0°, and the antenna subarrays 320-4 and 320-5 do not perform phase shift.

Second phase shift combination scenario: When the phase shifter 350-2 performs phase shift by 45°, and the phase shifters 350-1 and 350-3 separately perform phase shift by 90°, the antenna subarray 320-1 performs phase shift by 135°, the antenna subarray 320-2 performs phase shift by 90°, the antenna subarray 320-3 performs phase shift by 45°, and the antenna subarray 320-4 does not perform phase shift. When the phase shifter 350-5 performs phase shift by -45°, and the phase shifters 350-4 and 350-6 separately perform phase shift by -90°, the antenna subarray 320-5 does not perform phase shift, the antenna subarray 320-6 performs phase shift by -45°, the antenna subarray 320-7 performs phase shift by -90°, and the antenna subarray 320-8 performs phase shift by -135°.

Third phase shift combination scenario: When the phase shifter 350-2 performs phase shift by 90°, and the phase shifters 350-1 and 350-3 separately perform phase shift by 180°, the antenna subarray 320-1 performs phase shift by 270°, the antenna subarray 320-2 performs phase shift by 180°, the antenna subarray 320-3 performs phase shift by 90°, and the antenna subarray 320-4 does not perform phase shift. When the phase shifter 350-5 performs phase shift by -90°, and the phase shifters 350-4 and 350-6 separately perform phase shift by -180°, the antenna subarray 320-5 does not perform phase shift, the antenna subarray 320-6 performs phase shift by -90°, the antenna subarray 320-7 performs phase shift by -180°, and the antenna subarray 320-8 performs phase shift by -270°.

In this case, in the first phase shift combination scenario, the antenna subarrays 320-1 to 320-4 of the channel 1 form an analog beam 1, and the antenna subarrays 320-5 to 320-8 of the channel 2 form an analog beam 1. In the second phase shift combination scenario, the antenna subarrays 320-1 to 320-4 of the channel 1 form an analog beam 2, and the antenna subarrays 320-5 to 320-8 of the channel 2 form an analog beam 2. In the third phase shift combination scenario, the antenna subarrays 320-1 to 320-4 of the channel 1 form an analog beam 3, and the antenna subarrays 320-5 to 320-8 of the channel 2 form an analog beam 3. Therefore, it may be learned that, in the state 1, each PA can perform switch between analog beams in a plurality of different directions, thereby increasing a scanning width of an analog beam on a premise that an antenna gain is improved.

For example, when the switches 360-1 to 360-4 are all turned off (referred to as a state 2 below), there may be a plurality of different phase shift combination scenarios. Examples are as follows:

First phase shift combination scenario: When the phase shifters 350-2 and 350-5 perform phase shift by 0°, the antenna subarrays 320-3 and 320-6 both perform phase shift by 0°, and the antenna subarrays 320-4 and 320-5 do not perform phase shift.

Second phase shift combination scenario: When the phase shifter 350-2 performs phase shift by 45° and the phase shifter 350-5 performs phase shift by -45°, the antenna subarray 320-3 performs phase shift by 45°, the antenna subarray 320-6 performs phase shift by -45°, and the antenna subarrays 320-4 and 320-5 do not perform phase shift.

Third phase shift combination scenario: When the phase shifter 350-2 performs phase shift by 90° and the phase shifter 350-5 performs phase shift by -90°, the antenna subarray 320-3 performs phase shift by 90°, the antenna subarray 320-6 performs phase shift by -90°, and the antenna subarrays 320-4 and 320-5 do not perform phase shift.

In this case, in the first phase shift combination scenario, the antenna subarrays 320-3 and 320-4 of the channel 1 form an analog beam 1, and the antenna subarrays 320-5 and 320-6 of the channel 2 form an analog beam 1. In the second phase shift combination scenario, the antenna subarrays 320-3 and 320-4 of the channel 1 form an analog beam 2, and the antenna subarrays 320-5 and 320-6 of the channel 2 form an analog beam 2. In the third phase shift combination scenario, the antenna subarrays 320-3 and 320-4 of the channel 1 form an analog beam 3, and the antenna subarrays 320-5 and 320-6 of the channel 2 form an analog beam 3. In addition, for the analog beam formed in the foregoing state 2, a single PA may be connected to fewer antenna subarrays, to obtain a wider beam, cover users in a larger range, and reduce a performance loss caused by frequent beam switching.

For example, when the switch 360-1 and the switch 360-3 are turned off, and the switch 360-2 and the switch 360-4 are turned on, there may be a plurality of different phase shift combination scenarios. Examples are as follows:

First phase shift combination scenario: When the phase shifters 350-2, 350-3, 350-5, and 350-6 separately perform phase shift by 0°, the antenna subarrays 320-2, 320-3, 320-6, and 320-7 separately perform phase shift by 0°, and the antenna subarrays 320-4 and 320-5 do not perform phase shift.

Second phase shift combination scenario: When the phase shifter 350-2 performs phase shift by 45°, the phase shifter 350-3 performs phase shift by 90°, the phase shifter 350-5 performs phase shift by -45°, and the phase shifter 350-6 performs phase shift by -90°, the antenna subarray 320-2 performs phase shift by 90°, the antenna subarray 320-3 performs phase shift by 45°, the antenna subarrays 320-4 and 320-5 do not perform phase shift, the antenna subarray 320-6 performs phase shift by -45°, and the antenna subarray 320-7 performs phase shift by -90°.

Third phase shift combination scenario: When the phase shifter 350-3 performs phase shift by 180°, the phase shifter 350-1 performs phase shift by 90°, the phase shifter 350-5 performs phase shift by -90°, and the phase shifter 350-6 performs phase shift by -180°, the antenna subarray 320-2 performs phase shift by 180°, the antenna subarray 320-3 performs phase shift by 90°, the antenna subarrays 320-4 and 320-5 do not perform phase shift, the antenna subarray 320-6 performs phase shift by -90°, and the antenna subarray 320-7 performs phase shift by -180°.

In this case, in the first phase shift combination scenario, the antenna subarrays 320-2 to 320-4 of the channel 1 form an analog beam 1, and the antenna subarrays 320-5 to 320-7 of the channel 2 form an analog beam 1. In the second phase shift combination scenario, the antenna subarrays 320-2 to 320-4 form an analog beam 2, and the antenna subarrays 320-5 to 320-7 of the channel 2 form an analog beam 2. In the third phase shift combination scenario, the antenna subarrays 320-2 to 320-4 form an analog beam 3, and the antenna subarrays 320-5 to 320-7 of the channel 2 form an analog beam 3. In addition, for the analog beam formed in the foregoing state 3, a quantity of antenna subarrays that can be connected to a single PA is between that in the state 1 and that in the state 2, to provide more abundant antenna gain options, thereby adapting to different application scenarios.

For example, when the switches 360-1 and 360-2 are turned off, and the switches 360-3 and 360-4 are turned on (in a variant state 1), there may be a plurality of different phase shift combination scenarios. Examples are as follows:

First phase shift combination scenario: When the phase shifters 350-2 and 350-4 to 350-6 separately perform phase shift by 0°, the antenna subarrays 320-3, 320-6, 320-7, and 320-8 separately perform phase shift by 0°, and the antenna subarrays 320-4 and 320-5 do not perform phase shift.

Second phase shift combination scenario: When the phase shifter 350-2 performs phase shift by 45°, the phase shifter 350-5 performs phase shift by -45°, and the phase shifters 350-4 and 350-6 perform phase shift by -90°, the antenna subarray 320-3 performs phase shift by 45°, the antenna subarrays 320-4 and 320-5 do not perform phase shift, the antenna subarray 320-6 performs phase shift by -45°, the antenna subarray 320-7 performs phase shift by -90°, and the antenna subarray 320-8 performs phase shift by -135°.

Third phase shift combination scenario: When the phase shifter 350-2 performs phase shift by 90°, the phase shifter 350-5 performs phase shift by -90°, and the phase shifters 350-4 and 350-6 perform phase shift by -180°, the antenna subarray 320-3 performs phase shift by 90°, the antenna subarrays 320-4 and 320-5 do not perform phase shift, the antenna subarray 320-6 performs phase shift by -90°, the antenna subarray 320-7 performs phase shift -180°, and the antenna subarray 320-8 performs phase shift -270°.

In this case, in the first phase shift combination scenario, the antenna subarrays 320-3 and 320-4 form an analog beam 1-1, and the antenna subarrays 320-5 to 320-8 form an analog beam 1-2. In the second phase shift combination scenario, the antenna subarrays 320-3 and 320-4 form an analog beam 2-1, and the antenna subarrays 320-5 to 320-8 form an analog beam 2-2. In the third phase shift combination scenario, the antenna subarrays 320-3 and 320-4 form an analog beam 3-1, and the antenna subarrays 320-5 to 320-8 form an analog beam 3-2. Beam widths of the analog beam 1-1, the analog beam 2-1, and the analog beam 3-1 formed by the antenna subarrays 320-3 and 320-4 are the same as an analog beam width in the state 2, and beam widths of the analog beam 1-2, the analog beam 2-2, and the analog beam 3-2 formed by the antenna subarrays 320-5 to 320-8 are the same as an analog beam width in the state 1.

For example, when the switch 360-3 is turned off, and the switch 360-1, the switch 360-2, and the switch 360-4 are turned on (referred to as a variant state 2 below), there may be a plurality of different phase shift combination scenarios. Examples are as follows:

First phase shift combination scenario: When the phase shifter 350-1, the phase shifter 350-2, the phase shifter 350-3, the phase shifter 350-5, and the phase shifter 350-6 perform phase shift by 0°, the antenna subarrays 320-1, 320-2, 320-3, 320-6, and 320-7 all perform phase shift by 0°, and the antenna subarrays 320-4 and 320-5 do not perform phase shift.

Second phase shift combination scenario: When the phase shifter 350-2 performs phase shift by 45°, the phase shifter 350-1 performs phase shift by 90°, the phase shifter 350-3 performs phase shift by 90°, the phase shifter 350-5 performs phase shift by -45°, and the phase shifter 350-6 performs phase shift by -90°, the antenna subarrays 320-1, 320-2, 320-3, 320-6, and 320-7 separately perform phase shift by 135°, 90°, 45°, -45°, and -90°, and the antenna subarrays 320-4 and 320-5 do not perform phase shift.

Third phase shift combination scenario: When the phase shifter 350-2 performs phase shift by 90°, the phase shifter 350-1 performs phase shift by 180°, the phase shifter 350-3 performs phase shift by 180°, the phase shifter 350-5 performs phase shift by -90°, and the phase shifter 350-6 performs phase shift by -180°, the antenna subarrays 320-1, 320-2, 320-3, 320-6, and 320-7 separately perform phase shift by 270°, 180°, 90°, -90°, and -180°, and the antenna subarrays 320-4 and 320-5 do not perform phase shift.

In this case, in the first phase shift combination scenario, the antenna subarrays 320-1 to 320-4 form an analog beam 1-1, and the antenna subarrays 320-5 to 320-7 form an analog beam 1-2. In the second phase shift combination scenario, the antenna subarrays 320-1 to 320-4 form an analog beam 2-1, and the antenna subarrays 320-5 to 320-7 form an analog beam 2-2. In the third phase shift combination scenario, the antenna subarrays 320-1 to 320-4 form an analog beam 3-1, and the antenna subarrays 320-5 to 320-7 form an analog beam 3-2. Beam widths of the analog beam 1-1, the analog beam 2-1, and the analog beam 3-1 formed by the antenna subarrays 320-1 to 320-4 are the same as an analog beam width in the state 1, and beam widths of the analog beam 1-2, the analog beam 2-2, and the analog beam 3-2 formed by the antenna subarrays 320-5 to 320-7 are the same as an analog beam width in the state 3.

In some feasible implementations, to further obtain a wide beam and also improve robustness of the communication apparatus (for example, a branch circuit on which a phase shifter or a switch is located fails due to a reliability problem of the phase shifter or the switch), the first channel may further include a third switch, and the third switch is disposed on the branch circuit on which the second power divider is connected to the first power divider.

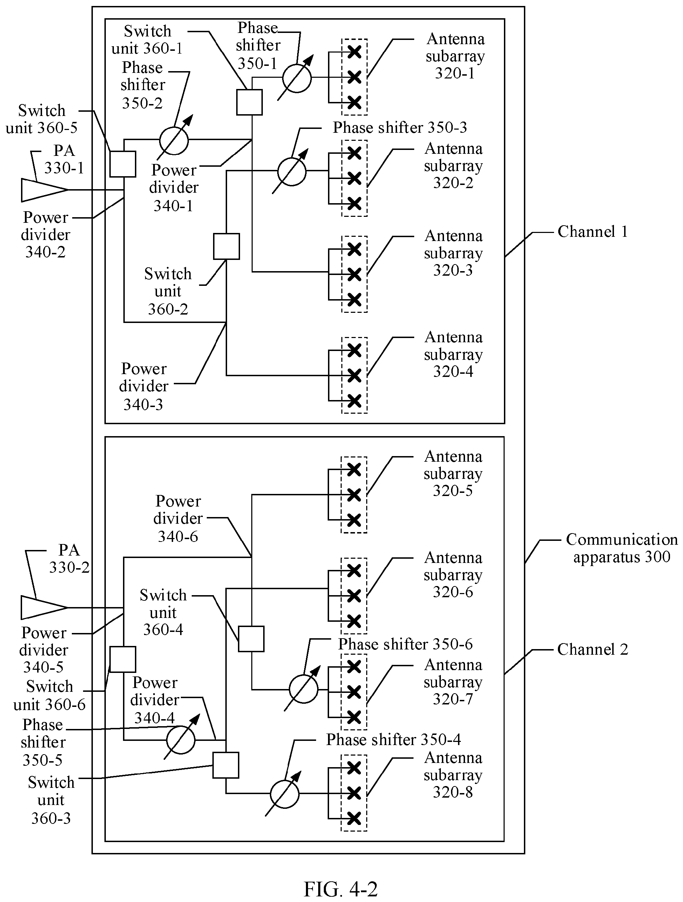

For example, as shown in FIG. 4-2, a switch 360-5 (a third switch) may be disposed in a connection of the power divider 340-2 in the channel 1, and a switch 360-6 (a third switch) may be disposed in the power divider 340-5 in the channel 2.

For example, when the switches 360-1 to 360-6 are all turned off (referred to as a variant state 3 below), there is only one scenario of an analog beam.

In this case, the antenna subarray 320-4 of the channel 1 forms an analog beam 1, and the antenna subarray 320-5 of the channel 2 forms an analog beam 1. In addition, for the analog beam formed in the foregoing variant state 3, a single PA may be connected to fewer antenna subarrays, to obtain a wider beam, cover users in a larger range, and reduce a performance loss caused by frequent beam switching.

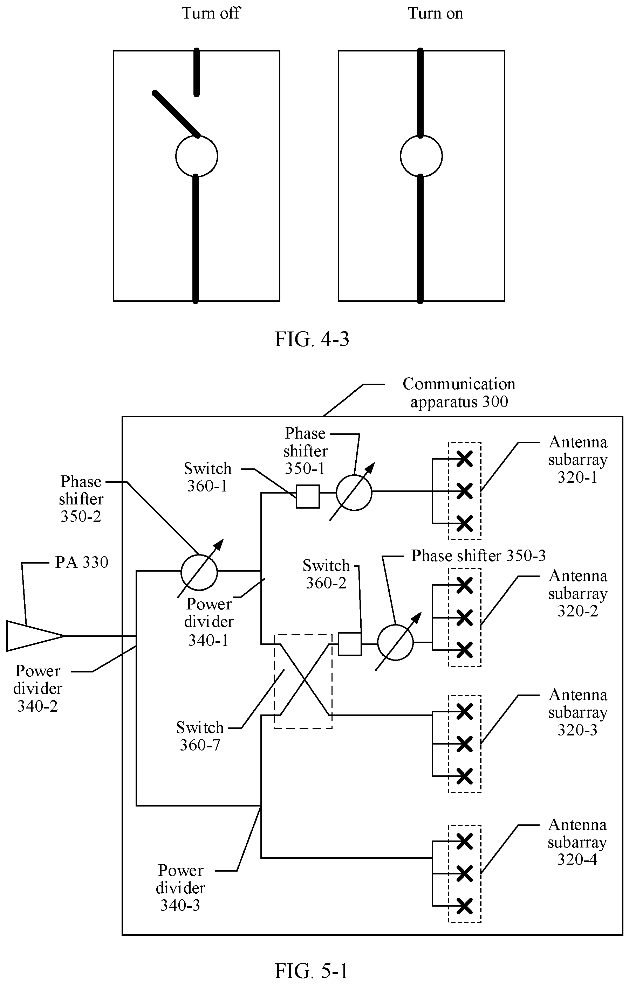

In some feasible implementations, states of the switches 360-1 to 360-6 may be turned off or turned on (as shown in FIG. 4-3). A quantity of driven antenna subarrays may be controlled by using the states of the switches 360-1 to 360-6, to change a beam width of a directivity pattern of an antenna array, thereby intelligently adapting to an application scenario. In some feasible implementations, the switches 360-1 to 360-6 may be switches based on metal-oxide-semiconductor field-effect transistors (metal-oxide-semiconductor field-effect transistor, MOSFET), or may be other switches, provided that the switches can be controlled by sending a control signal. This is not limited herein.

It should be noted that, the switch, the phase shifter, the power divider, and the like are all descriptions of functions, and an actual implementation is not limited. For example, each functional component may be implemented as an independent individual by using various different solutions, or a plurality of functional components may be designed as a whole.

For example, the power divider, the switch, and the phase shifter may be all independently designed; the power divider and the switch may be designed in an integrated manner, and the phase shifter is independently designed; or the power divider, the switch, and the phase shifter are designed in an integrated manner. This is not limited herein.

In this application, the switch and the phase shifter are disposed on the power divider. Therefore, in a scenario in which users are centralized or in a scenario in which a large quantity of users are located at a remote end, the antenna array may be switched to the state 1 by controlling the switches, and a direction of an analog beam may be controlled by using different phase shift combinations, so that a single PA can be connected to more antenna subarrays, to obtain a higher gain, and improve a user experience rate.

In a scenario in which users are distributed in a wide range, the antenna array may be switched to the state 2 by controlling the switches, so that a single PA can be connected to fewer antenna subarrays, to obtain a wider beam, enable a single beam to cover more terminal devices, and reduce a performance loss that may be caused by frequent beam switching. In conclusion, an intelligent beam adaptation method can be implemented by using the foregoing described states and variants thereof, so that the communication apparatus and a system can adapt to more use scenarios, and can achieve better network performance in different scenarios.

In some feasible implementations, to implement different quantities of analog beams in different states, quantities and locations of phase shifters and switches may be freely designed. In this case, a network connection relationship and the like remain unchanged, so that a plurality of different beams are generated.

### Embodiment 4

In some possible implementations, the first channel further includes a fourth switch, and the fourth switch is a double-pole double-throw switch. The fourth switch is separately connected to the first power divider, the third power divider, the second antenna subarray, and the third antenna subarray. When the fourth switch is in a first state, the first power divider is connected to the third antenna subarray, and the third power divider is connected to the second antenna subarray. When the fourth switch is in a second state, the first power divider is connected to the second antenna subarray, and the third power divider is connected to the third antenna subarray.

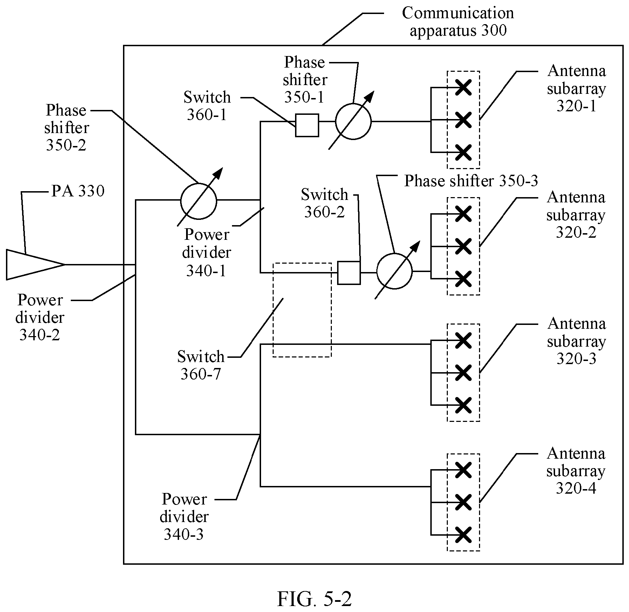

For example, as shown in FIG. 5-1, the antenna subarray 320-2 and the antenna subarray 320-3 are separately connected to a switch 360-7 (a fourth switch), and the switch 360-7 is in a double-pole double-throw form. The switch 360-7 in the double-pole double-throw form may have two switch states: "X" (a first state) and "H" (a second state). When a switch state is "X", as shown in FIG. 5-1, the power divider 340-1 is separately connected to the antenna subarray 320-1 and the antenna subarray 320-3, and the power divider 340-3 is separately connected to the antenna subarray 320-2 and the antenna subarray 320-4. When a switch state is "H", as shown in FIG. 5-2, the power divider 340-1 is separately connected to the antenna subarray 320-1 and the antenna subarray 320-2, and the power divider 340-3 is separately connected to the antenna subarray 320-3 and the antenna subarray 320-4.

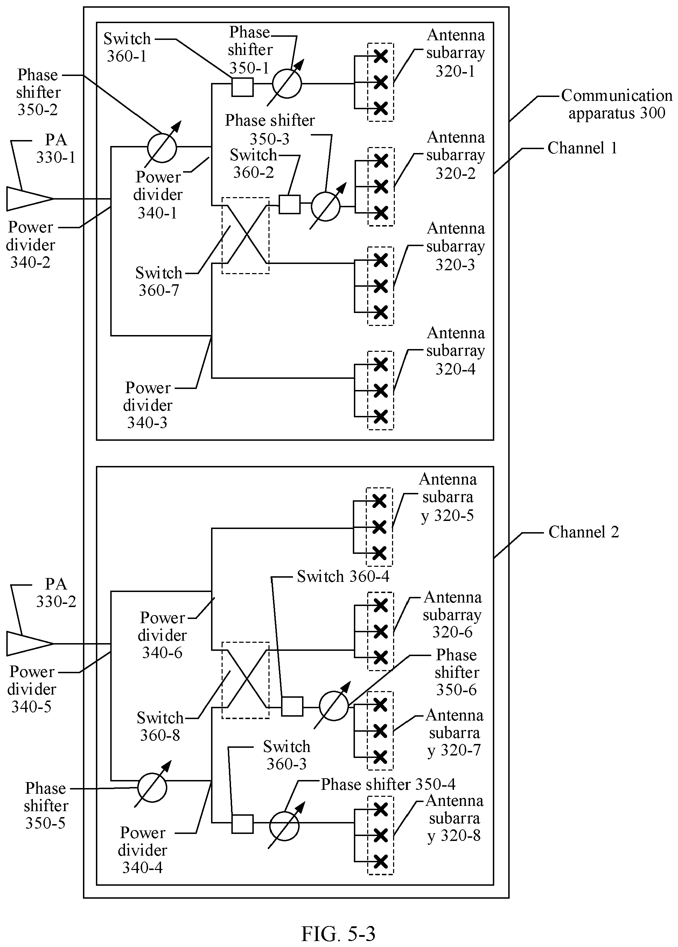

In some feasible implementations, as shown in FIG. 5-3, a communication apparatus 300 includes a channel 1 and a channel 2, the channel 1 includes a switch 360-7, and the channel 2 includes a switch 360-8.

In this case, when the switches 360-1 to 360-4 are all turned on, and the switch 360-7 and the switch 360-8 are in a switch state "X" (referred to as a state 1 below), there may be a plurality of different phase shift combination scenarios. Examples are as follows:

First phase shift combination scenario: When the phase shifters 350-1 to 350-8 separately perform phase shift by 0°, the antenna subarrays 320-1 to 320-3 and 320-6 to 320-8 separately perform phase shift by 0°, and the antenna subarrays 320-4 and 320-5 do not perform phase shift.

Second phase shift combination scenario: When the phase shifter 350-2 performs phase shift by 45°, and the phase shifters 350-1 and 350-3 separately perform phase shift by 90°, the antenna subarray 320-1 performs phase shift by 135°, the antenna subarray 320-2 performs phase shift by 90°, the antenna subarray 320-3 performs phase shift by 45°, and the antenna subarray 320-4 does not perform phase shift. When the phase shifter 350-5 performs phase shift by -45°, and the phase shifters 350-4 and 350-6 separately perform phase shift by -90°, the antenna subarray 320-5 does not perform phase shift, the antenna subarray 320-6 performs phase shift by -45°, the antenna subarray 320-7 performs phase shift by -90°, and the antenna subarray 320-8 performs phase shift by -135°.

Third phase shift combination scenario: When the phase shifter 350-2 performs phase shift by 90°, and the phase shifters 350-1 and 350-3 separately perform phase shift by 180°, the antenna subarray 320-1 performs phase shift by 270°, the antenna subarray 320-2 performs phase shift by 180°, the antenna subarray 320-3 performs phase shift by 90°, and the antenna subarray 320-4 does not perform phase shift. When the phase shifter 350-5 performs phase shift by -90°, and the phase shifters 350-4 and 350-6 separately perform phase shift by -180°, the antenna subarray 320-5 does not perform phase shift, the antenna subarray 320-6 performs phase shift by -90°, the antenna subarray 320-7 performs phase shift by -180°, and the antenna subarray 320-8 performs phase shift by -270°.

In this case, in the first phase shift combination scenario, the antenna subarrays 320-1 to 320-4 of the channel 1 form an analog beam 1, and the antenna subarrays 320-5 to 320-8 of the channel 2 form an analog beam 1. In the second phase shift combination scenario, the antenna subarrays 320-1 to 320-4 of the channel 1 form an analog beam 2, and the antenna subarrays 320-5 to 320-8 of the channel 2 form an analog beam 2. In the third phase shift combination scenario, the antenna subarrays 320-1 to 320-4 of the channel 1 form an analog beam 3, and the antenna subarrays 320-5 to 320-8 of the channel 2 form an analog beam 3. Therefore, it may be learned that, in the state 1, each PA can perform switch between analog beams in a plurality of different directions, thereby increasing a scanning width of an analog beam on a premise that an antenna gain is improved.

In this case, when the switches 360-1 to 360-4 are all turned off, and the switch 360-7 and the switch 360-8 are in a switch state "X" (referred to as a state 2 below), there may be a plurality of different phase shift combination scenarios. Examples are as follows:

First phase shift combination scenario: When the phase shifters 350-2 and 350-5 separately perform phase shift by 0°, the antenna subarrays 320-3 and 320-6 separately perform phase shift by 0°, and the antenna subarrays 320-4 and 320-5 do not perform phase shift.

Second phase shift combination scenario: When the phase shifter 350-2 performs phase shift by 45° and the phase shifter 350-5 performs phase shift by -45°, the antenna subarray 320-3 performs phase shift by 45°, the antenna subarray 320-6 performs phase shift by -45°, and the antenna subarrays 320-4 and 320-5 do not perform phase shift.

Third phase shift combination scenario: When the phase shifter 350-2 performs phase shift by 90° and the phase shifter 350-5 performs phase shift by -90°, the antenna subarray 320-3 performs phase shift by 90°, the antenna subarray 320-6 performs phase shift by -90°, and the antenna subarrays 320-4 and 320-5 do not perform phase shift.

In this case, in the first phase shift combination scenario, the antenna subarrays 320-3 and 320-4 of the channel 1 form an analog beam 1, and the antenna subarrays 320-5 and 320-6 of the channel 2 form an analog beam 1. In the second phase shift combination scenario, the antenna subarrays 320-3 and 320-4 of the channel 1 form an analog beam 2, and the antenna subarrays 320-5 and 320-6 of the channel 2 form an analog beam 2. In the third phase shift combination scenario, the antenna subarrays 320-3 and 320-4 of the channel 1 form an analog beam 3, and the antenna subarrays 320-5 and 320-6 of the channel 2 form an analog beam 3. In addition, for the analog beam formed in the foregoing state 2, a single PA may be connected to fewer antenna subarrays, to obtain a wider beam, cover users in a larger range, and reduce a performance loss caused by frequent beam switching.

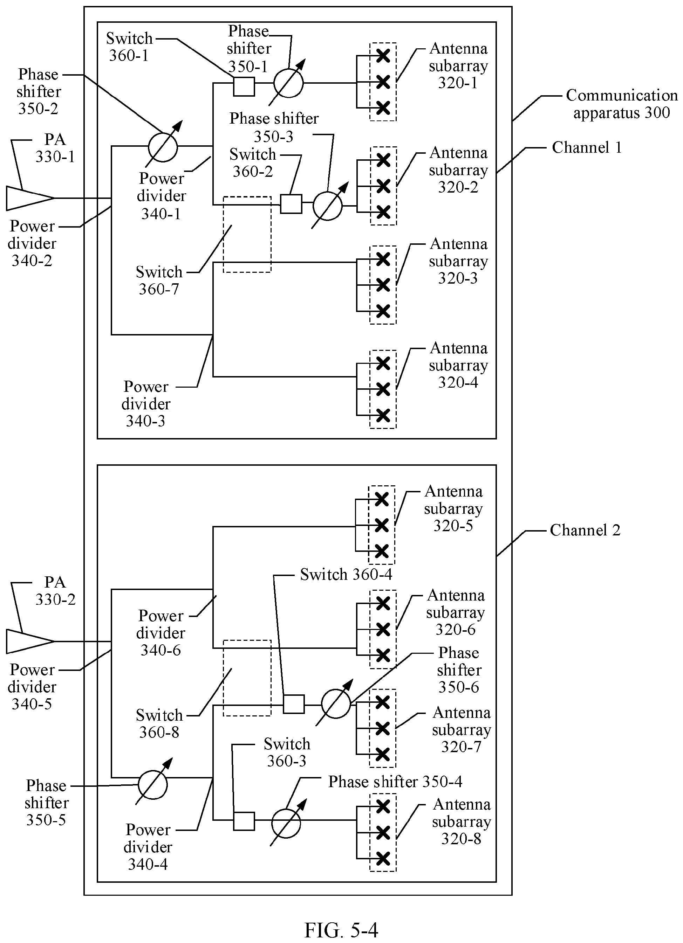

In this case, as shown in FIG. 5-4, when the switches 360-1 to 360-4 are all turned on, and the switch 360-7 and the switch 360-8 are in a switch state "H" (referred to as a state 3 below), there may be a plurality of different phase shift combination scenarios. Examples are as follows:

First phase shift combination scenario: When the phase shifters 350-1 to 350-6 separately perform phase shift by 0°, the antenna subarrays 320-1 to 320-3 and 320-6 to 320-8 separately perform phase shift by 0°, and the antenna subarrays 320-4 and 320-5 do not perform phase shift.

Second phase shift combination scenario: When the phase shifters 350-1 to 350-3 separately perform phase shift by 45° and the phase shifters 350-4 to 350-6 separately perform phase shift by -45°, when the phase shifter 350-2 performs phase shift by 90°, the phase shifter 350-5 performs phase shift by -90°, and the phase shifters 350-1, 350-3, 350-4, and 350-6 separately perform phase shift by 0°, or when the phase shifters 350-2 and 350-5 separately perform phase shift by 0°, the phase shifters 350-1 and 350-3 separately perform phase shift by 90°, and the phase shifters 350-4 and 350-6 separately perform phase shift by -90°, the antenna subarrays 320-1 and 320-2 separately perform phase shift by 90°, the antenna subarrays 320-3 to 320-6 do not perform phase shift, and the antenna subarrays 320-7 and 320-8 separately perform phase shift by -90°.

Third phase shift combination scenario: When the phase shifters 350-1 to 350-3 separately perform phase shift by 90° and the phase shifters 350-4 to 350-6 separately perform phase shift by -90°, when the phase shifter 350-2 performs phase shift by 180°, the phase shifter 350-5 performs phase shift by -180°, and the phase shifters 350-1, 350-3, 350-4, and 350-6 separately perform phase shift by 0°, or when the phase shifters 350-2 and 350-5 separately perform phase shift by 0°, the phase shifters 350-1 and 350-3 separately perform phase shift by 180°, and the phase shifters 350-4 and 350-6 separately perform phase shift by -180°, the antenna subarrays 320-1 and 320-2 separately perform phase shift by 180°, the antenna subarrays 320-3 to 320-6 do not perform phase shift, and the antenna subarrays 320-7 and 320-8 separately perform phase shift by -180°.

In this case, in the first phase shift combination scenario, the antenna subarrays 320-1 to 320-4 of the channel 1 form an analog beam 1, and the antenna subarrays 320-5 to 320-8 of the channel 2 form an analog beam 1. In the second phase shift combination scenario, the antenna subarrays 320-1 to 320-4 of the channel 1 form an analog beam 2, and the antenna subarrays 320-5 to 320-8 of the channel 2 form an analog beam 2. In the third phase shift combination scenario, the antenna subarrays 320-1 to 320-4 of the channel 1 form an analog beam 3, and the antenna subarrays 320-5 to 320-8 of the channel 2 form an analog beam 3. In addition, for the analog beam formed in the foregoing state 3, a quantity of antenna subarrays that can be connected to a single PA is the same as that in the state 1, but beam distribution in different phase shift combination scenarios is more centralized than that in the state 1.

### Embodiment 5

In some possible implementations, the first channel further includes a second power divider, a third power divider, a fifth switch, a second antenna subarray, a fourth antenna subarray, and a fourth phase shifter. The first antenna subarray, the third antenna subarray, the second antenna subarray, and the fourth antenna subarray are sequentially arranged. The second power divider is separately connected to the fifth switch and the third power divider. The third power divider is separately connected to the fifth switch and the fourth antenna subarray. The fourth phase shifter is disposed on a branch circuit on which the second power divider is connected to the fifth switch. The fifth switch includes a first single-pole double-throw switch, a second single-pole double-throw switch, and a gating switch. The first single-pole double-throw switch is connected to the second power divider, the second single-pole double-throw switch is connected to the second antenna subarray, and the gating switch is connected to the third power divider. The first single-pole double-throw switch includes an interface 1 and an interface 2, the gating switch includes an interface 3, and the second single-pole double-throw switch includes an interface 4 and an interface 5. The interface 1 is connected to the first power divider, the interface 2 is connected to the interface 4, and the interface 5 is connected to the interface 3. When the fifth switch is in a third state, the first single-pole double-throw switch is connected to the interface 1, the gating switch is turned on, and the second single-pole double-throw switch is connected to the interface 5. When the fifth switch is in a fourth state, the first single-pole double-throw switch is connected to the interface 2, the gating switch is turned off, and the second single-pole double-throw switch is connected to the interface 4.

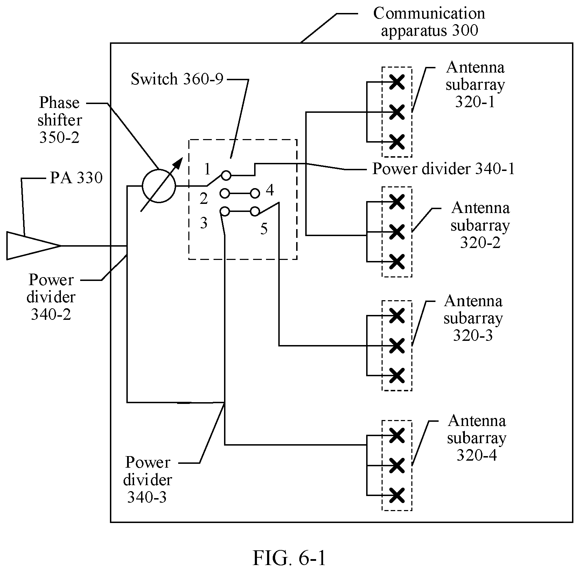

For example, as shown in FIG. 6-1, a channel 1 includes an antenna subarray 320-1 (a first antenna subarray), an antenna subarray 320-3 (a second antenna subarray), a power divider 340-2 (a second power divider), a power divider 340-3 (a third power divider), a switch 360-9 (a fifth switch), an antenna subarray 320-2 (a third antenna subarray), an antenna subarray 320-4 (a fourth antenna subarray), and a phase shifter 350-2 (a fourth phase shifter). The antenna subarrays 320-1 to 320-4 are sequentially arranged. The power divider 340-2 is separately connected to the switch 360-9 and the power divider 340-3. The power divider 340-3 is separately connected to the switch 360-9 and the antenna subarray 320-4. The phase shifter 350-2 is disposed on a branch circuit on which the power divider 340-2 is connected to the switch 360-9. The switch 360-9 includes a single-pole double-throw switch 1, a single-pole double-throw switch 2, and a gating switch. The single-pole double-throw switch 1 is connected to the power divider 340-2, the single-pole double-throw switch 2 is connected to the antenna subarray 320-3, and the gating switch is connected to the power divider 340-3. The single-pole double-throw switch 1 includes an interface 1 and an interface 2, the gating switch includes an interface 3, and the single-pole double-throw switch 2 includes an interface 4 and an interface 5. The interface 1 is connected to the power divider 340-1, the interface 2 is connected to the interface 4, and the interface 5 is connected to the interface 3. When the switch 360-9 is in a third state, the single-pole double-throw switch 1 is connected to the interface 1, the gating switch is turned on, and the single-pole double-throw switch 2 is connected to the interface 5, in other words, the interface 1 is connected to the power divider 340-2, the interface 3 is connected to the power divider 340-3, and the interface 5 is connected to the antenna subarray 320-3. When the switch 360-9 is in a fourth state, the single-pole double-throw switch 1 is connected to the interface 2, the gating switch is turned off, and the single-pole double-throw switch 2 is connected to the interface 4, in other words, the interface 2 is connected to the power divider 340-2, and the interface 4 is connected to the antenna subarray 320-3.

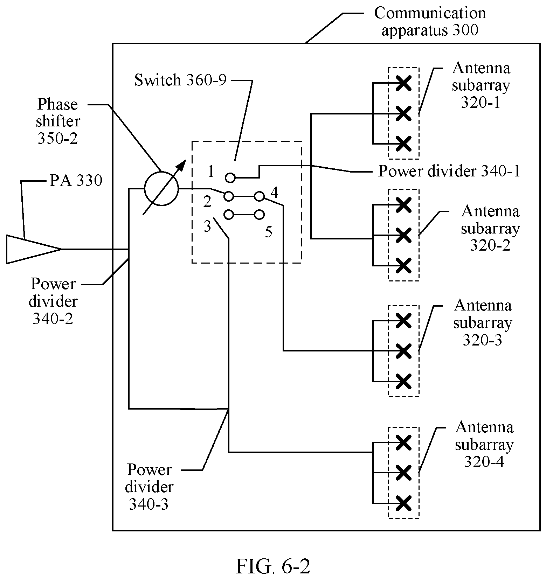

To be specific, when the gating switch is turned on, and the interfaceinterface 1 of the single-pole double-throw switch 1 and the interface 5 of the single-pole double-throw switch 2 are connected, in other words, when the interfaces 1, 3, and 5 are conducted (in the third state), as shown in FIG. 6-1, the power divider 340-2 is separately connected to the power divider 340-1 and the power divider 340-3, the power divider 340-1 is connected to the antenna subarrays 320-1 and 320-2, and the power divider 340-3 is connected to the antenna subarrays 320-3 and 320-4. In this case, the antenna subarrays 320-1 to 320-4 are all activated. When the gating switch is turned off, and the interface 2 of the single-pole double-throw switch 1 and the interface 4 of the single-pole double-throw switch 2 are connected, in other words, when the interfaces 2 and 4 are conducted (in the fourth state), as shown in FIG. 6-2, the power divider 340-2 is separately connected to the antenna subarray 320-3 and the power divider 340-3, and the power divider 340-3 is connected to the antenna subarray 320-4. In this case, the antenna subarray 320-3 and the antenna subarray 320-4 are activated.

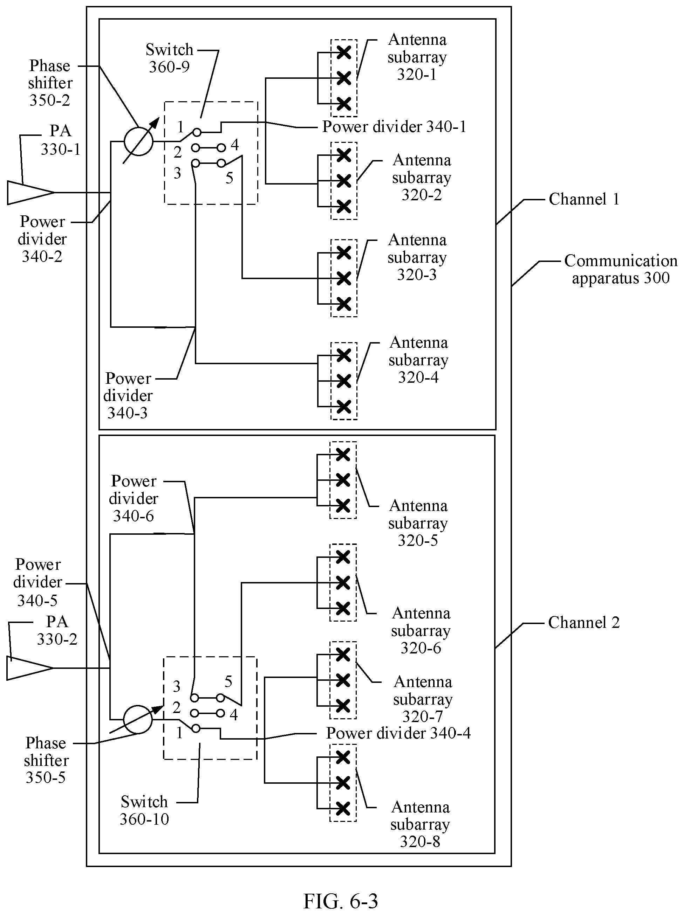

In some feasible implementations, as shown in FIG. 6-3, a communication apparatus 300 includes a channel 1 and a channel 2, the channel 1 includes a switch 360-9, and the channel 1 includes a switch 360-10. The switch 360-9 and the switch 360-10 each have interfaces 1 to 5.

In this case, when interfaces 1/3/5 of the switch 360-9 and the switch 360-10 are conducted, there may be a plurality of different phase shift combination scenarios. Examples are as follows:

First phase shift combination scenario: When the phase shifters 350-2 and 350-5 perform phase shift by 0°, the antenna subarrays 320-1, 320-2, 320-7, and 320-8 separately perform phase shift by 0°, and the antenna subarrays 320-3 to 320-6 do not perform phase shift.

Second phase shift combination scenario: When the phase shifters 350-2 and 350-5 perform phase shift by 45°, the antenna subarrays 320-1 and 320-2 separately perform phase shift by 45°, the antenna subarrays 320-3 to 320-6 do not perform phase shift, and the antenna subarrays 320-7 and 320-8 separately perform phase shift by -45°.

Third phase shift combination scenario: When the phase shifter 350-2 performs phase shift by 90°, and the phase shifter 350-1 performs phase shift by -90°, the antenna subarrays 320-1 and 320-2 separately perform phase shift by 90°, the antenna subarrays 320-3 to 320-6 do not perform phase shift, and the antenna subarrays 320-7 and 320-8 separately perform phase shift by -90°.

In this case, in the first phase shift combination scenario, the antenna subarrays 320-1 to 320-4 of the channel 1 form an analog beam 1, and the antenna subarrays 320-5 to 320-8 of the channel 2 form an analog beam 1. In the second phase shift combination scenario, the antenna subarrays 320-1 to 320-4 of the channel 1 form an analog beam 2, and the antenna subarrays 320-5 to 320-8 of the channel 2 form an analog beam 2. In the third phase shift combination scenario, the antenna subarrays 320-1 to 320-4 form an analog beam 3, and the antenna subarrays 320-5 to 320-8 form an analog beam 3. Therefore, it may be learned that, in the state 1, each PA can perform switch between analog beams in a plurality of different directions, thereby increasing a scanning width of an analog beam on a premise that an antenna gain is improved.

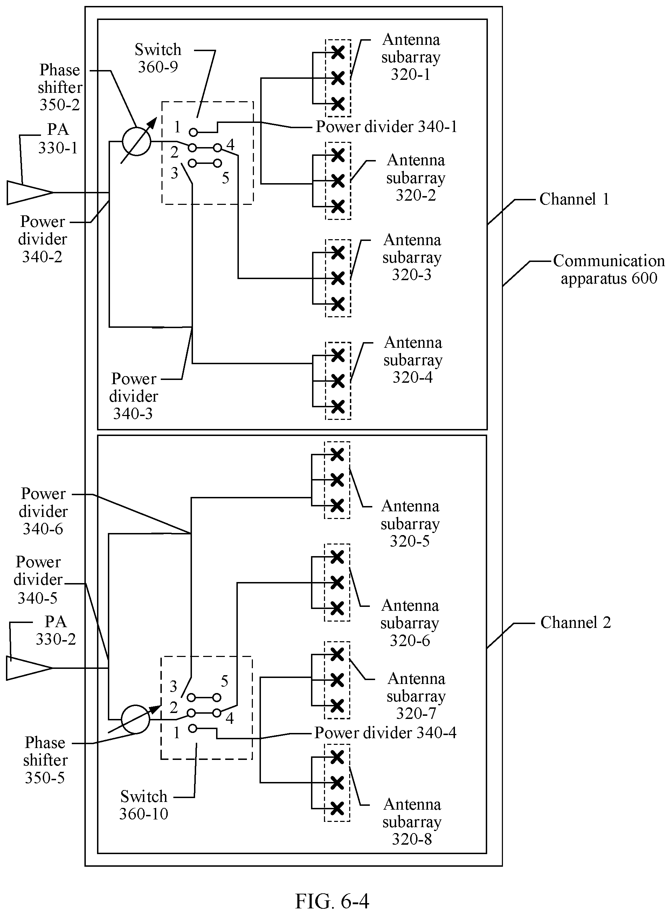

In this case, as shown in FIG. 6-4, when interfaces 2/4 of the switch 360-9 and the switch 360-10 are conducted, there may be a plurality of different phase shift combination scenarios. Examples are as follows:

First phase shift combination scenario: When the phase shifters 350-2 and 350-5 separately perform phase shift by 0°, the antenna subarrays 320-3 and 320-6 separately perform phase shift by 0°, and the antenna subarrays 320-4 and 320-5 do not perform phase shift.

Second phase shift combination scenario: When the phase shifter 350-2 performs phase shift by 45° and the phase shifter 350-5 performs phase shift by -45°, the antenna subarray 320-3 performs phase shift by 45°, the antenna subarrays 320-4 and 320-5 do not perform phase shift, and the antenna subarray 320-6 performs phase shift by -45°.

Third phase shift combination scenario: When the phase shifter 350-2 performs phase shift by 90°and the phase shifter 350-5 performs phase shift by -90°, the antenna subarray 320-3 performs phase shift by 90°, the antenna subarrays 320-4 and 320-5 do not perform phase shift, and the antenna subarray 320-6 performs phase shift by -90°.

In this case, in the first phase shift combination scenario, the antenna subarrays 320-3 and 320-4 of the channel 1 form an analog beam 1, and the antenna subarrays 320-5 and 320-6 of the channel 2 form an analog beam 1. In the second phase shift combination scenario, the antenna subarrays 320-3 and 320-4 of the channel 1 form an analog beam 2, and the antenna subarrays 320-5 and 320-6 of the channel 2 form an analog beam 2. In the third phase shift combination scenario, the antenna subarrays 320-3 and 320-4 of the channel 1 form an analog beam 3, and the antenna subarrays 320-5 and 320-6 of the channel 2 form an analog beam 3. In addition, for the analog beam formed in the foregoing state 2, a single PA may be connected to fewer antenna subarrays, to obtain a wider beam, cover users in a larger range, and reduce a performance loss caused by frequent beam switching.

In this application, the single-pole double-throw switch is disposed on the power divider. Therefore, in some scenarios (for example, when users are centralized), switching to the state 1 may be performed, so that more antenna subarrays are connected, to obtain a higher gain, and improve a user experience rate. In some other scenarios (for example, when users are distributed in a wide range), switching to the state 2 may be performed, so that fewer antenna subarrays are connected, to obtain a wider beam, cover more terminal devices, and reduce a performance loss that may be caused by frequent beam switching. According to the foregoing beam adaptation method, the communication apparatus and a system can adapt to more use scenarios, and can achieve optimal network performance in different scenarios.

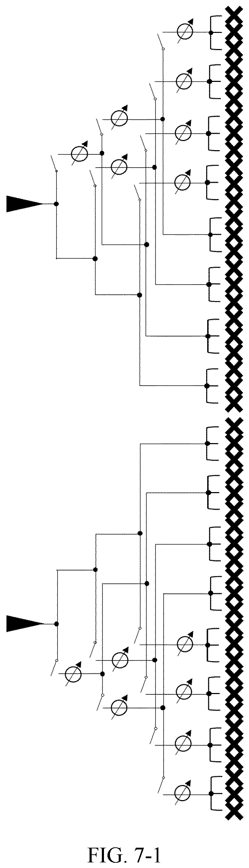

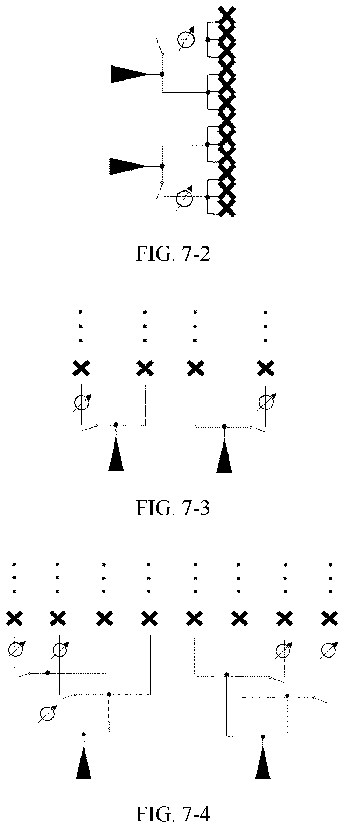

It should be noted that, in the foregoing embodiments, each PA is connected to and drives a maximum of four antenna subarrays. In this application, a quantity of antenna subarrays driven by a single PA may be freely designed as required. For example, FIG. 7-1 shows a "possible topology 1" (a single PA drives eight antenna subarrays), and FIG. 7-2 shows a "possible topology 2" (a single PA drives two antenna subarrays). In some feasible implementations, a single PA may drive another quantity of antenna subarrays. This is not limited herein.

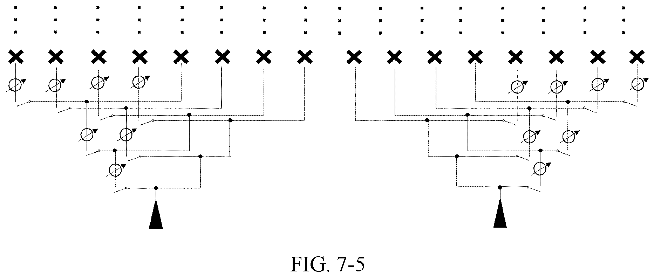

In some possible implementations, each antenna subarray in the communication apparatus is vertically placed or horizontally placed. This is not limited herein. For example, FIG. 7-3 shows a "possible topology 3", FIG. 7-4 shows a "possible topology 4", and FIG. 7-5 shows a "possible topology 5". In some feasible implementations, there may be another type of topology. This is not limited herein.

In some possible implementations, the communication apparatus 300 further includes a control chip, and the control chip is configured to control each phase shifter and each switch in the communication apparatus.

The control chip may include a processing unit and a communication unit. The processing unit may be, for example, a processor, and the communication unit may be, for example, an input/output interface, a pin, or a circuit. The processing unit may execute computer-executable instructions stored in a storage unit, to enable the chip in the terminal to perform the wireless report information sending method according to any one of the first aspect or the possible implementations of the first aspect. Optionally, the storage unit is a storage unit in the chip, for example, a register or a cache. Alternatively, the storage unit may be a storage unit that is in the terminal and that is located outside the chip, for example, a read-only memory (read-only memory, ROM) or another type of static storage device that can store static information and instructions, for example, a random access memory (random access memory, RAM).

The processor mentioned anywhere above may be a general-purpose central processing unit, a microprocessor, an ASIC, or one or more integrated circuits configured to control program execution of the foregoing method.

In addition, it should be noted that the foregoing described apparatus embodiments are merely examples. The units described as separate parts may or may not be physically separate, and parts displayed as units may or may not be physical units, to be specific, may be located in one place, or may be distributed on a plurality of network units. Some or all of the modules may be selected based on an actual requirement to achieve the objectives of the solutions of embodiments. In addition, in the accompanying drawings of the apparatus embodiments provided in this application, connection relationships between modules indicate that the modules have communication connections with each other, and the communication connections may be specifically implemented as one or more communication buses or signal cables.

Based on the foregoing descriptions of the implementations, a person skilled in the art may clearly understand that this application may be implemented by software and necessary universal hardware, or may be certainly implemented by dedicated hardware, including an application-specific integrated circuit, a dedicated CPU, a dedicated memory, a dedicated component, or the like. Generally, any function completed by a computer program can be easily implemented by corresponding hardware. Moreover, a specific hardware structure used to achieve a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for enabling a computer device (which may be a personal computer, a server, a network device, or the like) to perform the method described in embodiments of this application.

All or some of the foregoing embodiments may be implemented by using software, hardware, firmware, or any combination thereof. When software is used to implement the foregoing embodiments, all or some of the foregoing embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A communication apparatus, comprising a first channel, wherein the first channel comprises:
a first power divider, a first switch, a first phase shifter, a first antenna subarray, and a third antenna subarray, wherein
the first power divider is separately connected to the first antenna subarray and the third antenna subarray;
the first switch is disposed on a branch circuit on which the first power divider is connected to the first antenna subarray; and
the first phase shifter is disposed on the branch circuit on which the first power divider is connected to the first antenna subarray or a branch circuit on which the first power divider is connected to the third antenna subarray.

2. The communication apparatus according to claim 1, wherein the first channel further comprises a second switch, a second phase shifter, a third phase shifter, a second power divider, a third power divider, a second antenna subarray, and a fourth antenna subarray, wherein the first antenna subarray, the second antenna subarray, the third antenna subarray, and the fourth antenna subarray are sequentially arranged;
the second power divider is separately connected to the first power divider and the third power divider;
the third power divider is separately connected to the second antenna subarray and the fourth antenna subarray;
the second switch is disposed on a branch circuit on which the third power divider is connected to the second antenna subarray;
the second phase shifter is disposed on a branch circuit on which the second power divider is connected to the first power divider or a branch circuit on which the second power divider is connected to the third power divider; and
the third phase shifter is disposed on the branch circuit on which the third power divider is connected to the second antenna subarray or a branch circuit on which the third power divider is connected to the fourth antenna subarray.

3. The communication apparatus according to claim 2, wherein the first channel further comprises a third switch, and the third switch is disposed on the branch circuit on which the second power divider is connected to the first power divider.

4. The communication apparatus according to claim 2 or 3, wherein the first channel further comprises a fourth switch, and the fourth switch is a double-pole double-throw switch;
the fourth switch is separately connected to the first power divider, the third power divider, the second antenna subarray, and the third antenna subarray;
when the fourth switch is in a first state, the first power divider is connected to the third antenna subarray, and the third power divider is connected to the second antenna subarray; and
when the fourth switch is in a second state, the first power divider is connected to the second antenna subarray, and the third power divider is connected to the third antenna subarray.

5. The communication apparatus according to claim 1, wherein the first channel further comprises:
a second power divider, a third power divider, a fifth switch, a second antenna subarray, a fourth antenna subarray, and a fourth phase shifter, wherein the first antenna subarray, the third antenna subarray, the second antenna subarray, and the fourth antenna subarray are sequentially arranged;
the second power divider is separately connected to the fifth switch and the third power divider;
the third power divider is separately connected to the fifth switch and the fourth antenna subarray;
the fourth phase shifter is disposed on a branch circuit on which the second power divider is connected to the fifth switch;
the fifth switch comprises a first single-pole double-throw switch, a second single-pole double-throw switch, and a gating switch, wherein the first single-pole double-throw switch is connected to the second power divider, the second single-pole double-throw switch is connected to the second antenna subarray, and the gating switch is connected to the third power divider;
the first single-pole double-throw switch comprises an interface 1 and an interface 2, the gating switch comprises an interface 3, and the second single-pole double-throw switch comprises an interface 4 and an interface 5; and
the interface 1 is connected to the first power divider, the interface 2 is connected to the interface 4, and the interface 5 is connected to the interface 3.

6. The communication apparatus according to claim 5, wherein
when the fifth switch is in a third state, the first single-pole double-throw switch is connected to the interface 1, the gating switch is turned on, and the second single-pole double-throw switch is connected to the interface 5; and
when the fifth switch is in a fourth state, the first single-pole double-throw switch is connected to the interface 2, the gating switch is turned off, and the second single-pole double-throw switch is connected to the interface 4.

7. The communication apparatus according to any one of claims 1 to 6, wherein each antenna subarray in the communication apparatus is vertically placed or horizontally placed.

8. The communication apparatus according to any one of claims 1 to 7, wherein each antenna subarray in the communication apparatus comprises at least one antenna element.

9. The communication apparatus according to any one of claims 1 to 8, wherein the communication apparatus further comprises a control chip, and the control chip is configured to control each phase shifter and each switch in the communication apparatus.

10. The communication apparatus according to any one of claims 1 to 9, further comprising a second channel, wherein a plurality of antenna subarrays in the first channel and a plurality of antenna subarrays in the second channel are sequentially arranged, and a connection manner of a power divider, a switch, and the plurality of antenna subarrays in the second channel is mirror-symmetric with that in the first channel.
